# FASCICULE DE BREVET EUROPEEN

(11) **EP 0 527 075 B1**
(45) Date de publication et mention de la délivrance du brevet: **02.11.1994**
(21) Numéro de dépôt: 92402128.0
(22) Date de dépôt: 23.07.1992
(51) Int. Cl.: E02B 9/04, F04D 29/60

(54) **Prise d'eau, en particulier pour installation industrielle**
Wasserentnahmevorrichtung, insbesondere für industrielle Anlage
Water-intake, particularly for industrial installation

(30) Priorité: 24.07.1991 FR 9109372
(43) Date de publication de la demande: 10.02.1993
(73) Titulaire: E. BEAUDREY & Cie., F-75018 Paris (FR)
(72) Inventeur: Jackson, Philip Eugène, F-75007 Paris (FR)
(74) Mandataire: CABINET BONNET-THIRION

(56) Documents cités:
- FR-A- 2 542 042
- FR-A- 2 617 912
- US-A- 2 045 442

## Description

La présente invention concerne d'une manière générale les prises d'eau, et elle vise plus particulièrement, mais non nécessairement exclusivement, le cas des prises d'eau pour installations industrielles.

Globalement, ces prises d'eau constituent des stations de tamisage et de pompage assez complexes comportant, dans leur formulation la plus complète, une grille, qui est usuellement une grille à barreaux, et à laquelle il est le plus souvent associé un dégrilleur, un filtre, qui est le plus souvent un filtre rotatif à chaîne ou à tambour, les accessoires usuellement associés à un tel filtre rotatif, et une pompe de circulation, qui est généralement une pompe à axe vertical immergée dont le moteur est le plus souvent disposé à l'air libre.

A ce jour, elles sont usuellement implantées à la faveur d'un ouvrage de maçonnerie relativement important et profond, nécessitant pour son établissement des travaux de génie civil relativement difficiles à mener car au moins en partie exécutés sous le niveau de l'eau et dans la nappe phréatique sous-jacente (voir p.ex. FR-A-2 617 912).

Si, pour des prises d'eau capables de débits unitaires importants, de l'ordre par exemple d'au moins plusieurs mètres cubes par seconde, ces travaux de génie civil sont quasi inévitables, ils apparaissent redondants et coûteux pour des prises d'eau de capacité plus réduite.

La présente invention a d'une manière générale pour objet une prise d'eau permettant au contraire de donner satisfaction au moindre prix dans un tel cas.

Cette prise d'eau est d'une manière générale caractérisée en ce qu'elle comporte, rassemblés sur un même bâti, en formant conjointement avec lui un ensemble monobloc et autonome, d'une part, une pompe apte à être immergée, et, d'autre part, l'un au moins des constituants suivants : dégrilleur associé à une grille interposée sur l'aspiration de la pompe, filtre disposé sur le refoulement de celle-ci.

Par exemple, suivant une forme préférée de réalisation, la pompe peut avantageusement être disposée à la partie inférieure d'un fût qui, lorsqu'un filtre est mis en oeuvre, porte celui-ci à sa partie supérieure et sert de conduit entre la pompe et lui.

Quoi qu'il en soit, la prise d'eau suivant l'invention constitue, comme précédemment, mais sous une forme particulièrement compacte, une station de tamisage et de pompage, et, grâce à son caractère autonome, son installation peut avantageusement se faire à la faveur de travaux de génie civil spécifiques réduits, voire même sans de tels travaux.

Par exemple elle peut aisément être accrochée à un quai, en bordure de celui-ci, à une barge, à un wharf, à un duc-d'Albe, voire, même, à des poteaux battus en pleine eau.

Les caractéristiques et avantages de la présente invention ressortiront d'ailleurs de la description qui va suivre, à titre d'exemple, en référence aux dessins schématiques annexés dans lesquels :
la figure 1 est, avec un arrachement local, une vue en élévation d'une prise d'eau suivant l'invention, suivant la flèche I de la figure 3 ;
la figure 2 en est une vue latérale, suivant la flèche II de la figure 1 ;
la figure 3 en est une vue partielle en plan, suivant la ligne III-III de la figure 1.

D'une manière générale, la prise d'eau 10 suivant l'invention, qui est destinée à être implantée à la faveur d'un quelconque plan d'eau 11, comporte, rassemblés sur un même bâti 12, en formant conjointement avec lui un ensemble monobloc et autonome, d'une part, une pompe 13, apte à être immergée, et, d'autre part, l'un au moins des constituants suivants : dégrilleur 14 associé à une grille 16 interposée sur l'aspiration 18 de la pompe 13, filtre 19 disposé sur le refoulement 20 de celle-ci.

Par exemple, et tel que représenté, la pompe 13 est disposée à la partie inférieure d'un fût 22, qui appartient au bâti 12, et qui, lorsque, tel que représenté, un filtre 19 est mis en oeuvre, porte ce filtre 19 à sa partie supérieure et sert de conduit entre la pompe 13 et celui-ci.

La pompe 13 ne relevant pas, par elle-même, de la présente invention, elle ne sera pas décrite ici.

Il suffira d'indiquer qu'il s'agit par exemple d'une pompe submersible à hélice et refoulement axial, qui, à la faveur d'un anneau de levage 23, est glissée dans le fût 22 jusqu'à venir simplement reposer sur un épaulement interne que forme à la base de celui-ci une bride 24 dûment prévue à cet effet, avec, en saillie sur cet épaulement, un têton qui en assure le calage angulaire par rapport à ce fût 22 et l'empêche donc de tourner par rapport à celui-ci.

Dans la forme de réalisation représentée, le fût 22 se prolonge vers le bas par un coude d'aspiration 25, qui se raccorde à lui par une bride 26, et en bout duquel est disposée la grille 16.

En pratique, ce fût 22 s'étend verticalement, et il est solidaire d'une plateforme 28, qui appartient comme lui au bâti 12, et qui est destinée à rester émergée.

Dans la forme de réalisation représentée, le fût 22 traverse cette plateforme 28, en s'étendant encore légèrement au dessus de celle-ci.

En pratique, il est relié à la plateforme 28 par une pluralité de nervures de raidissement triangulaires, 30, qui régulièrement réparties circulairement, s'étendent en dessous de cette plateforme 28.

Dans la forme de réalisation représentée, le filtre 19 est disposé directement en bout du fût 22.

Il présente pour ce faire à son entrée 32 une bride 33 par laquelle il est rapporté sur une bride 34 dûment prévue à cet effet à l'extrémité supérieure du fût 22.

Ce filtre 19 ne relevant pas par lui-même de la présente invention, il ne sera pas décrit en détail ici.

Il suffira d'indiquer qu'il s'agit, par exemple, et tel que représenté, d'un filtre à entrée 32 latérale et sortie 35 axiale du type de celui décrit dans le brevet français qui, déposé sous le numéro 76 18883, a été publié sous le numéro 2.355.544.

En bref, ce filtre 19 comporte, en position excentrée, dans un corps 36 dont la paroi latérale est globalement en colimaçon, une crépine fixe 38.

Dans la forme de réalisation représentée, ce filtre 19 est doté à sa partie supérieure d'anneaux de levage 39.

Sur sa sortie 35 est raccordée une canalisation d'évacuation 40.

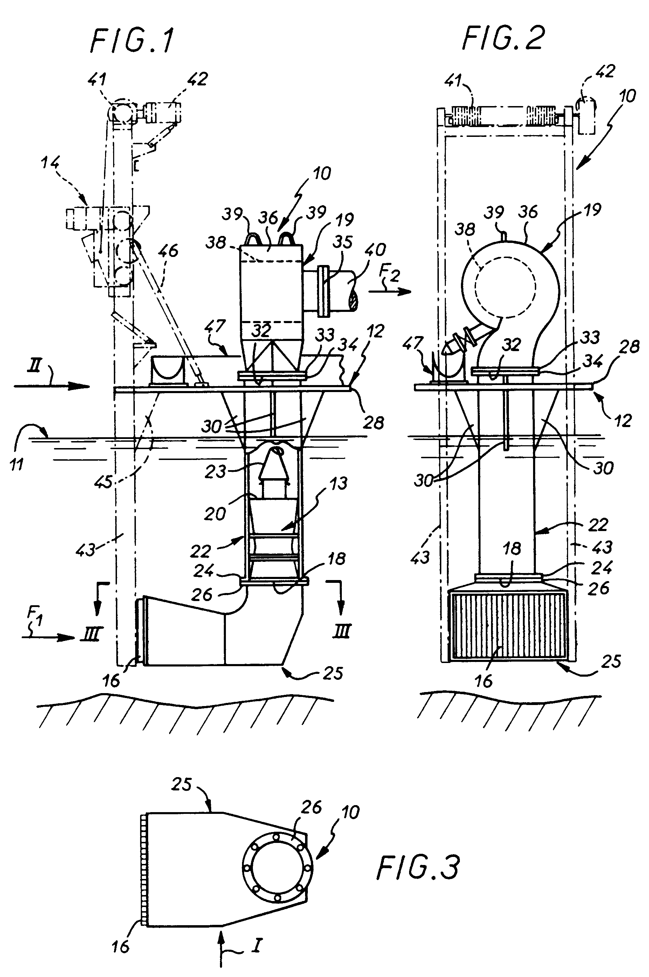

Enfin, dans la forme de réalisation représentée, la grille 16 est une grille à barreaux 16, et, tel que schématisé en traits interrompus sur la figure 1, il lui est associé un dégrilleur 14.

Ce dégrilleur 14 étant bien connu par lui-même, et ne relevant pas non plus en propre de la présente invention, il ne sera pas décrit ici.

Il suffit d'indiquer que, sous le contrôle d'un treuil 41 commandé par un moteur 42, il est monté mobile sur deux montants 43 parallèles, qui, à leur partie inférieure, sont solidaires du coude d'aspiration 25 et de la grille 16, et qui, dans leur zone médiane, sont solidaires de la plateforme 28, en étant reliés à celle-ci, d'une part, à sa surface inférieure, par des nervures de raidissement triangulaires 45, et, d'autre part, à sa surface supérieure, par des jambes de force 46, si nécessaire.

Dans la forme de réalisation représentée, la plateforme 28 porte par ailleurs un caniveau ou un panier de récolte 47 pour le recueil des débris en provenance tant du dégrilleur 14 que du filtre 19.

En service, l'eau aspirée par la pompe 13 pénètre par la grille 16 suivant la flèche F1 de la figure 1, et, une fois dûment tamisée, elle sort du filtre 19 suivant la flèche F2 de cette figure 1.

Ainsi, le fût 22 sert à la fois de support pour la pompe 13, de colonne de refoulement entre celle-ci et le filtre 19, et de support pour ce filtre 19.

Bien entendu, la présente invention ne se limite pas à la forme de réalisation décrite et représentée mais englobe toute variante d'exécution.

En particulier, à l'exclusion du moteur commandant l'éventuel dégrilleur, la prise d'eau suivant l'invention peut être totalement immergée.

Par ailleurs, au lieu d'être totalement verticale, comme plus particulièrement décrit et représenté, elle peut également être plus ou moins inclinée et/ou articulée pour permettre le relevage..

En outre, au lieu d'être assujettie au support qui la porte, que ce support soit un support fixe ou un support flottant, elle peut aussi bien être articulée à ce support.

## Revendications

1. Prise d'eau destinée à être implantée à la faveur d'un quelconque plan d'eau (11), caractérisée en ce qu'elle comporte, rassemblés sur un même bâti (12), en formant conjointement avec lui, un ensemble monobloc et autonome, d'une part, une pompe (13) apte à être immergée, et, d'autre part, l'un au moins des constituants suivants : dégrilleur (14) associé à une grille (16) interposée sur l'aspiration (18) de la pompe (13), filtre (19) disposé sur le refoulement (20) de celle-ci.

2. Prise d'eau suivant la revendication 1, caractérisée en ce que la pompe (13) est disposée à la partie inférieure d'un fût (22) qui, lorsqu'un filtre (19) est mis en oeuvre, porte celui-ci à sa partie supérieure et sert de conduit entre la pompe (13) et lui.

3. Prise d'eau suivant la revendication 2, caractérisée en ce que le filtre (19) est disposé directement en bout du fût (22).

4. Prise d'eau suivant l'une quelconque des revendications 2, 3, caractérisée en ce que le fût (22) est solidaire d'une plateforme (28).

5. Prise d'eau suivant la revendication 4, caractérisée en ce que la plateforme (28) est destinée à rester émergée.

6. Prise d'eau suivant l'une quelconque des revendications 4, 5, caractérisée en ce que le fût (22) traverse la plateforme (28).

7. Prise d'eau suivant l'une quelconque des revendications 2 à 6, caractérisée en ce que le filtre (19) est un filtre à entrée (32) latérale et sortie (35) axiale.

8. Prise d'eau suivant l'une quelconque des revendications 2 à 7, caractérisée en ce que le fût (22) se prolonge par un coude d'aspiration (25) en bout duquel est disposée la grille (16).

9. Prise d'eau suivant les revendications 6 et 8, prises conjointement, caractérisée en ce que lorsqu'un dégrilleur (14) est mis en oeuvre, ce dégrilleur (14) est monté mobile sur deux montants (43) solidaires de la plateforme (28).

## Claims

1. Water intake designed to be installed in relation to any surface of water (11), characterised in that it includes, collected together on a single support (12), forming conjointly with it a single-piece self-contained assembly, on the one hand a pump (13) suitable for being submerged and on the other hand at least one of the following components: a screen (14) associated with a grid (16) interposed on the intake (18) of the pump (13), and a filter (19) disposed on the discharge (20) from the latter.

2. Water intake according to Claim 1, characterised in that the pump (13) is disposed at the lower part of a shaft (22) which, when a filter (19) is used, carries the latter at its top and serves as a conduit between the pump (13) and it.

3. Water intake according to Claim 2, characterised in that the filter (19) is disposed directly at the end of the shaft (22).

4. Water intake according to either one of Claims 2 or 3, characterised in that the shaft (22) is fixed to a platform (28).

5. Water intake according to Claim 4, characterised in that the platform (28) is designed to remain above water.

6. Water intake according to either one of Claims 4 or 5, characterised in that the shaft (22) passes through the platform (28).

7. Water intake according to any one of Claims 2 to 6, characterised in that the filter (19) is a filter with a lateral inlet (32) and an axial outlet (35).

8. Water intake according to any one of Claims 2 to 7, characterised in that the shaft (22) is extended by an intake elbow (25) at the end of which the grid (16) is disposed.

9. Water intake according to Claims 6 and 8 taken together, characterised in that, when a screen (14) is used, this screen (14) is mounted so as to be able to move on two uprights (43) fixed to the platform (28).

## Patentansprüche

1. Für den Einbau bei beliegigem Wasserspiegel bestimmte Wasserentnahmevorrichtung, dadurch **gekennzeichnet,** daß sie als eine ein geschlossenes Ganzes bildende und selbständige Einheit auf ein und demselben Gestell (12) und mit diesem verbunden einerseits eine eintauchbare Pumpe (13) und andererseits eine oder mehrere der folgenden Komponenten umfaßt: auf der Ansaugseite der Pumpe (13) angeordnetes Gitter (16), mit dem Gitter zusammenwirkender Gitterreiniger (14), auf der Ausflußseite (20) der Pumpe angeordneter Filter (19).

2. Wasserentnahmevorrichtung nach dem Anspruch 1, dadurch **gekennzeichnet,** daß die Pumpe (13) in einem Zylinder (22) angeordnet ist, der bei Verwendung eines Filters (19) diesen auf seinem Oberteil trägt und als Führung zwischen der Pumpe (13) und dem Filter (19) dient.

3. Wasserentnahmevorrichtung nach dem Anspruch 2, dadurch **gekennzeichnet,** daß der Filter (19) direkt auf dem oberen Rand des Zylinders (22) angeordnet ist.

4. Wasserentnahmevorrichtung nach einem der Ansprüche 2 und 3, dadurch **gekennzeichnet,** daß der Zylinder (22) ein Teil mit einer Plattform (28) bildet.

5. Wasserentnahmevorrichtung nach dem Anspruch 4, dadurch **gekennzeichnet,** daß die Plattform (28) aus dem Wasser herausragt.

6. Wasserentnahmevorrichtung nach einem der Ansprüche 4 und 5, dadurch **gekennzeichnet,** daß der Zylinder (22) die Plattform (28) durchdringt.

7. Wasserentnahmevorrichtung nach einem oder mehreren der Ansprüche 2 bis 6, dadurch **gekennzeichnet,** daß der Filter (19) einer mit lateralem Eingang (32) und axialem Ausgang (35) ist.

8. Wasserentnahmevorrichtung nach einem oder mehreren der Ansprüche 2 bis 7, dadurch **gekennzeichnet,** daß der Zylinder (22) sich in einen Ansaugstutzen (25) fortsetzt, an dessen Ende das Gitter (16) angeordnet ist.

9. Wasserentnahmevorrichtung nach den Ansprüchen 6 und 8, dadurch **gekennzeichnet,** daß bei Verwendung eines Filterreinigers (14) dieser auf zwei senkrechten Stützen (43) beweglich angeordnet ist, die mit der Plattform (28) verbunden sind.
